# EUROPEAN PATENT APPLICATION

(11) **EP 4 756 797 A1**
(43) Date of publication of application: **10.06.2026**
(21) Application number: 23954868.8
(22) Date of filing: 05.10.2023
(51) Int. Cl.: G10L 17/04, G10L 17/24, G06F 16/33, G10L 15/26, G10L 15/30, G10L 15/00

(54) **DISPLAY DEVICE AND OPERATION METHOD THEREFOR**

(71) Applicant: LG Electronics Inc., Yeongdeungpo-gu Seoul 07336 (KR)
(72) Inventor: CHOI, Yoo Kyoung, Seoul 06772 (KR)
(74) Representative: Vossius & Partner Patentanwälte Rechtsanwälte mbB
(86) International application number: PCT/KR2023/015320
(87) International publication number: WO 2025/075220

(57) **Abstract**

A display device according to an embodiment of the present disclosure includes: a display; a network interface configured to communicate with one or more servers; and a controller configured to obtain a speaker registration sentence including a prompt word for speaker registration, display the generated speaker registration sentence on the display upon receiving a request for the speaker registration, obtain a voice command corresponding to the displayed speaker registration sentence, and transmit voice data corresponding to the obtained voice command to the one or more servers through the network interface, wherein the prompt word may include one of a name of latest content or a word representing a regional dialect.

## Description

### [Technical Field]

The present disclosure relates to a display device, and more particularly, to collecting user's speech voice through sentences for speaker registration.

### [Background Art]

A speaker recognition service refers to a service that identifies and distinguishes a specific speaker using voice recognition technology. The speaker recognition service can be used in various application fields and can be utilized in security, education, voice commands, and automation systems.

The speaker recognition service can analyze characteristics of voice uttered by a speaker to store unique voice patterns of each speaker, and identify the speaker based on the stored voice patterns.

A speaker registration process for registering the speaker's voice is necessary for the speaker recognition service.

In the speaker registration process, prompt words are provided to improve the accuracy of voice recognition.

The speaker utters the prompt words, and a voice recognition device such as a mobile device or TV recognizes the uttered prompt words to identify the speaker.

However, the prompt words provided in the conventional speaker registration process only provide trigger commands or general utterances, resulting in uniform voice recognition that does not consider the user's speech characteristics (dialect, speech style).

Additionally, there was a problem of low voice recognition rate for words such as names of the latest content.

### [Disclosure]

### [Technical Problem]

An object of the present disclosure is to supplement speaker recognition rate and voice recognition rate by utilizing prompt words in the user's speaker registration process.

An object of the present disclosure is to provide a personalized service for the speaker by extracting voice characteristics for prompt words in the speaker registration process.

### [Technical Solution]

A display device according to an embodiment of the present disclosure includes: a display; a network interface configured to communicate with one or more servers; and a controller configured to obtain a speaker registration sentence including a prompt word for speaker registration, display the generated speaker registration sentence on the display upon receiving a request for the speaker registration, obtain a voice command corresponding to the displayed speaker registration sentence, and transmit voice data corresponding to the obtained voice command to the one or more servers through the network interface, wherein the prompt word may include one of a name of latest content or a word representing a regional dialect.

An operating method of a display device according to an embodiment of the present disclosure includes: obtaining a speaker registration sentence including a prompt word for speaker registration; displaying the generated speaker registration sentence upon receiving a request for the speaker registration; obtaining a voice command corresponding to the displayed speaker registration sentence; and transmitting voice data corresponding to the obtained voice command to one or more servers, wherein the prompt word may include one of a name of latest content or a word representing a regional dialect.

### [Advantageous Effect]

According to an embodiment of the present disclosure, as voice data for names of latest content with little data, words corresponding to dialects, and words with low recognition rate are collected, the speaker recognition rate and the conversion accuracy of the STT model can be improved.

According to an embodiment of the present disclosure, a voice recognition service optimized for an individual can be provided through feature extraction of voice uttered by the user.

### [Description of Drawings]

FIG. 1 is a block diagram illustrating a configuration of a display device according to an embodiment of the present invention.
FIG. 2 is a block diagram of a remote control device according to an embodiment of the present invention.
FIG. 3 shows an actual configuration example of a remote control device according to an embodiment of the present invention.
FIG. 4 shows an example of utilizing a remote control device according to an embodiment of the present invention.
FIG. 5 shows an Artificial Intelligence (AI) server according to an embodiment of the present disclosure.
FIG. 6 is a ladder diagram for explaining an operating method of an Al system according to an embodiment of the present disclosure.
FIG. 7 is a ladder diagram for explaining an operating method of an Al system according to an embodiment of the present disclosure.
FIGS. 8a to 8c are diagrams explaining examples of displaying various forms of speaker registration sentences according to an embodiment of the present disclosure.
FIG. 9 is a diagram showing a collection process of voice data for prompt words according to an embodiment of the present disclosure.
FIG. 10 is a flowchart for explaining an operating method of a display device according to an embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

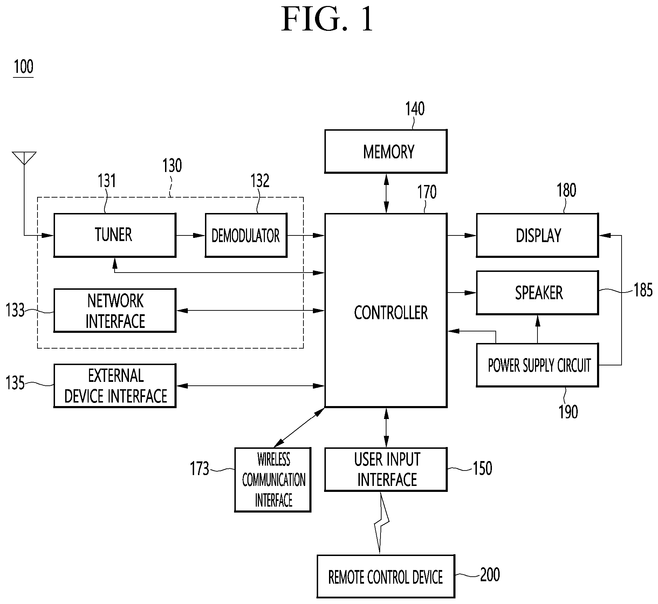

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

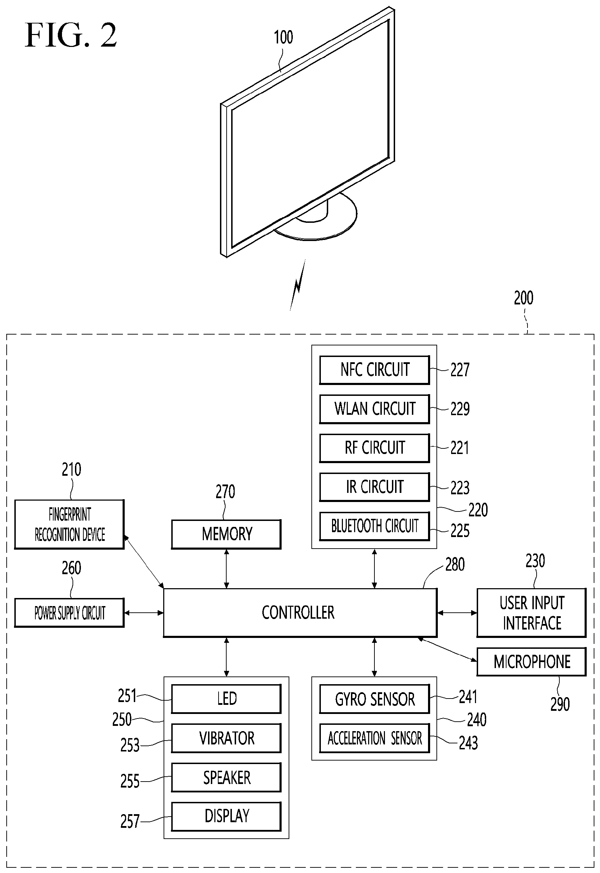

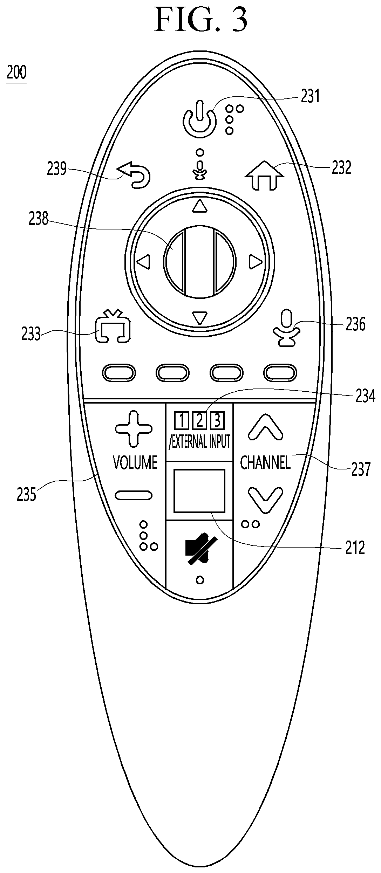

A remote control device according to an embodiment of the present disclosure will be described with reference to FIGS. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to FIG. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

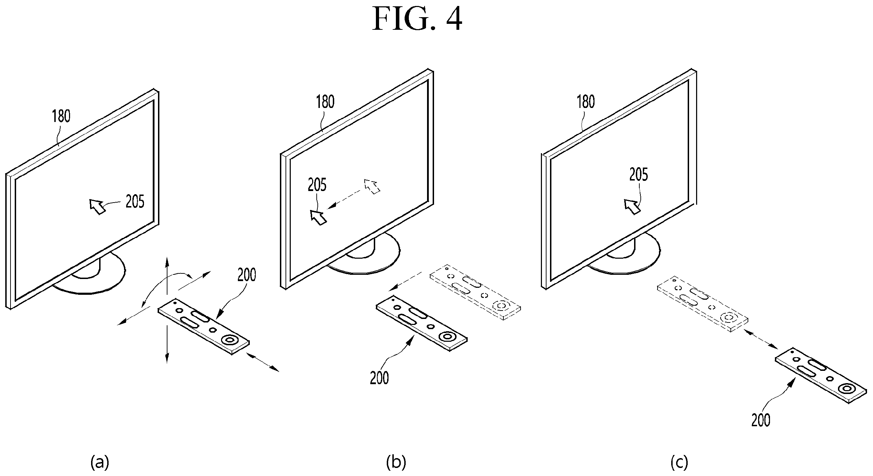

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as shown in the drawing, the remote control device 200 may be referred to as a spatial remote control device.

FIG. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement may not be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

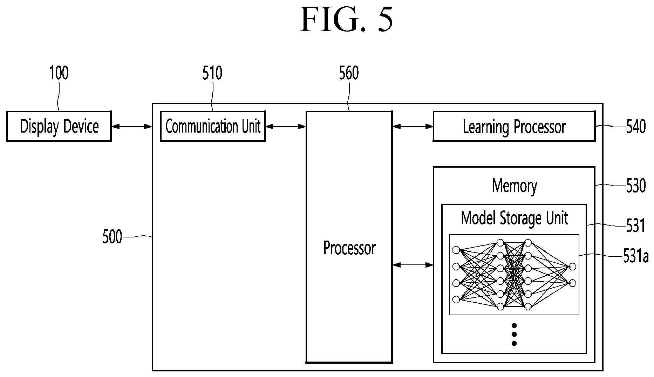

FIG. 5 shows an Artificial Intelligence (AI) server according to an embodiment of the present disclosure.

Referring to FIG. 5, the Al server 500 may refer to a device that trains an artificial neural network using a machine learning algorithm or uses a trained artificial neural network.

The Al server 500 may be configured of a plurality of servers to perform distributed processing, and may be defined as a 5G network.

The Al server 500 may be included as a part of the Al device 100 to perform at least a part of Al processing together.

The Al server 500 may include a communication unit 510, a memory 530, a learning processor 540, and a processor 560.

The communication unit 510 may transmit and receive data with an external device such as the display device 100.

The memory 530 may include a model storage unit 531.

The model storage unit 531 may store a model (or artificial neural network 531a) that is being trained or has been trained through the learning processor 540.

The learning processor 540 may train the artificial neural network 531a using training data. A learning model may be used while being mounted on the Al server 500 of the artificial neural network, or may be used while being mounted on an external device such as the display device 100.

The learning model may be implemented in hardware, software, or a combination of hardware and software. When part or all of the learning model is implemented in software, one or more instructions constituting the learning model may be stored in the memory 530.

The processor 560 may infer a result value for new input data using the learning model, and generate a response or control command based on the inferred result value.

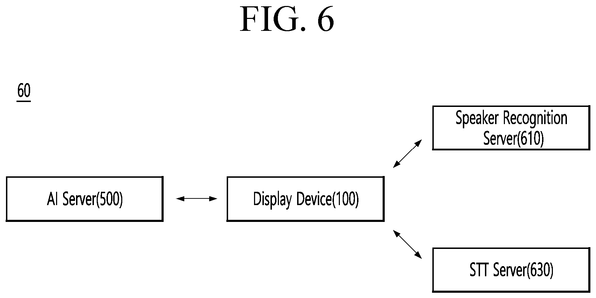

FIG. 6 is a diagram for explaining a configuration of an Al system according to an embodiment of the present disclosure.

Referring to FIG. 6, the Al system 60 may include an Al server 500, a display device 100, a speaker recognition server 610, and a Speech To Text (STT) server 630.

In one embodiment, the speaker recognition server 610 and the STT server 630 may be configured as one server.

In another embodiment, the Al server 500 may include the speaker recognition server 610 and the STT server 630.

Components of the Al system may communicate with each other through the Internet.

The Al server 500 may generate one or more prompt words for speaker registration.

The Al server 500 may transmit the generated one or more prompt words to the display device 100 through the communication unit 510.

The display device 100 may display a speaker registration sentence on the display 180 based on the received one or more prompt words.

The display device 100 may obtain a voice command corresponding to the speaker registration sentence.

The display device 100 may transmit voice data corresponding to the obtained voice command and speaker identification information to the speaker recognition server 610 through the network interface 133.

The speaker recognition server 610 may match characteristics of the received voice data with the speaker identification information and store them in a speaker database.

The display device 100 may transmit voice data corresponding to the obtained voice command to the STT server 630 through the network interface 133.

The STT server 630 may convert the received voice data into text data, and update the STT model based on the converted text data.

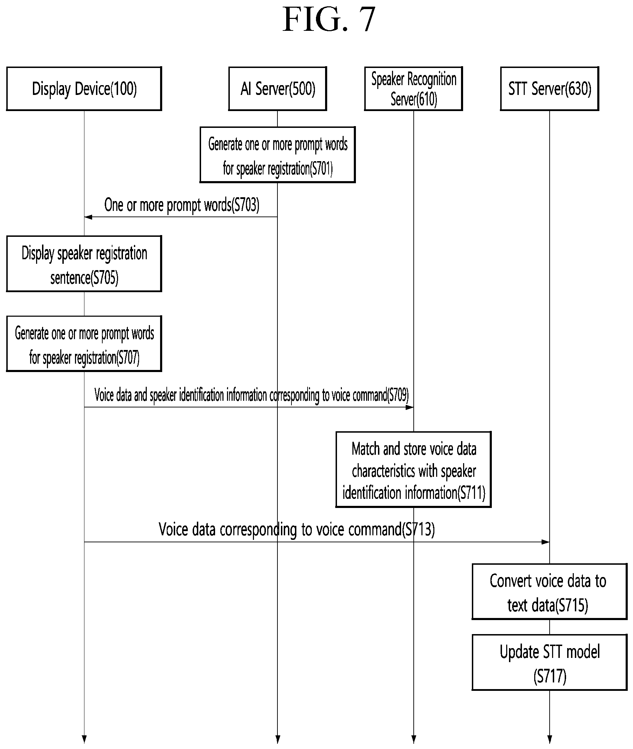

FIG. 7 is a ladder diagram for explaining an operating method of an Al system according to an embodiment of the present disclosure.

The processor 560 of the Al server 500 may generate one or more prompt words for speaker registration (S701).

Speaker registration may be a process of extracting characteristics of voice uttered by a speaker and matching speaker identification information with the extracted voice characteristics.

When the speaker registration process is completed, the display device 100 may extract characteristics of voice uttered by the speaker, and perform a voice recognition function only when there is speaker identification information matched with the extracted characteristics.

For speaker registration, a speaker registration sentence including a prompt word to be displayed on the display device 100 is necessary.

For this purpose, the processor 560 may generate one or more prompt words for speaker registration.

In one embodiment, the processor 560 may generate a prompt word based on data stored in a regional dialect database. The regional dialect database may store words representing dialects used in each of a plurality of regions for one language.

For example, the regional dialect database may include a plurality of words recognized as dialects in a first region and a plurality of words recognized as dialects in a second region.

The processor 560 may obtain, as a prompt word, a standard word that can be pronounced as a dialect in a region corresponding to location information of the display device 100.

The regional dialect database may be included in the Al server 500 or may be provided separately from the Al server 500.

In another embodiment, the processor 560 may generate a prompt word based on data stored in a latest content database. The latest content database may store information about recent content. Information about content may include one or more of a name of content, an abbreviation of content, and an alias.

The latest content database may periodically receive information about content from a content provider.

The processor 560 may extract a name of latest content from the latest content database, and obtain the extracted name of latest content as a prompt word.

In another embodiment, the processor 560 may obtain a prompt word based on a word recognition rate. The processor 560 may obtain a corresponding word as a prompt word when the word recognition rate of a specific word is smaller than a preset recognition rate.

The word recognition rate may indicate a ratio at which a specific uttered word is recognized. The word recognition rate may indicate the number of times successfully recognized compared to the total number of times the word was uttered.

The processor 560 may obtain, as a prompt word, a word whose word recognition rate is smaller than a preset recognition rate among a plurality of words stored in a database.

In another embodiment, the processor 560 may obtain, as a prompt word, a word whose word recognition rate is smaller than a preset recognition rate among names of latest content and words representing regional dialects.

The processor 560 of the Al server 500 may transmit the generated one or more prompt words to the display device 100 through the communication unit 510 (S703).

In one embodiment, the processor 560 may transmit one or more prompt words generated to be used for speaker registration to the display device 100 through the communication unit 510.

In another embodiment, the processor 560 may generate one or more speaker registration sentences including one or more prompt words, and transmit the generated one or more speaker registration sentences to the display device 100 through the communication unit 510.

The speaker registration sentence may be a sentence including a wake-up word for activating the voice recognition function of the display device 100 and the generated prompt word.

The controller 170 of the display device 100 may display a speaker registration sentence on the display 180 based on the received one or more prompt words (S705).

The controller 170 may generate one or more speaker registration sentences including the received one or more prompt words and a wake-up word.

When the controller 170 receives a request for speaker registration through voice, it may display the speaker registration sentence on the display 180.

The controller 170 may receive a request for speaker registration through voice through execution of an application providing a voice recognition service.

The controller 170 of the display device 100 may obtain a voice command corresponding to the speaker registration sentence (S707).

In one embodiment, the controller 170 may obtain a voice command corresponding to the speaker registration sentence from the remote control device 200 through the user input interface 150. A user utters the speaker registration sentence through the remote control device 200, and the remote control device 200 may transmit the voice command uttered by the user to the display device 100.

In another embodiment, the controller 170 may receive a voice command corresponding to the speaker registration sentence through a microphone (not shown) provided in the display device 200.

The controller 170 of the display device 100 may transmit voice data corresponding to the obtained voice command and speaker identification information to the speaker recognition server 610 through the network interface 133 (S709).

The speaker identification information may include information capable of identifying a speaker.

The speaker identification information may include information capable of identifying a speaker, such as the speaker's name, account, and email.

The speaker recognition server 610 may match characteristics of the received voice data with the speaker identification information and store them in a speaker database (S711).

The speaker recognition server 610 may extract characteristics of voice data. Characteristics of voice data may include one or more of pitch, timbre, gender, volume, and frequency band.

In one embodiment, the speaker recognition server 610 may extract characteristics of voice data using Mel-Frequency Cepstral Coefficient (MFCC) technology.

MFCC technology can extract frequency characteristics of voice by converting voice data from a frequency domain to a mel frequency scale.

In another embodiment, the speaker recognition server 610 may extract characteristics of voice data using a Deep Learning-based voice feature extraction model.

The voice feature extraction model may be a model that extracts characteristics of voice data from voice data using a neural network architecture such as Convolutional Neural Network (CNN) or Recurrent Neural Network (RNN).

The speaker recognition server 610 may match the extracted characteristics of voice data with speaker identification information and store them in a speaker database.

The speaker database may store speaker identification information of each of a plurality of speakers and a voice feature set (including a plurality of voice features) matched with the speaker identification information.

After the speaker registration process, when a speaker utters voice, the speaker recognition server 610 may compare characteristics of the uttered voice signal with characteristics stored in the speaker database to determine whether the speaker is the same.

The speaker recognition server 610 may determine that the speaker is the same when one or more of the characteristics of the uttered voice signal match one or more characteristics stored in the database.

In particular, as the speaker recognition server 610 extracts and stores characteristics of voice data corresponding to a prompt word representing a dialect, the recognition accuracy of a specific speaker can be improved.

Meanwhile, the controller 170 of the display device 100 may transmit voice data corresponding to the obtained voice command to the STT server 630 through the network interface 133 (S713).

The STT server 630 may convert the received voice data into text data (S715), and update the STT model based on the converted text data (S717).

The STT server 630 may use the converted text data as training data for updating the STT model. The STT model may be a model that converts voice data into text data.

That is, for words representing dialects included in the speaker registration sentence, names of latest content, or prompt words with low word recognition rates, much data may not have been collected.

The STT server 630 may retrain the STT model using the speaker's voice data for the prompt words collected by the display device 100 during the speaker registration process.

Accordingly, the conversion accuracy of the STT model can be greatly improved.

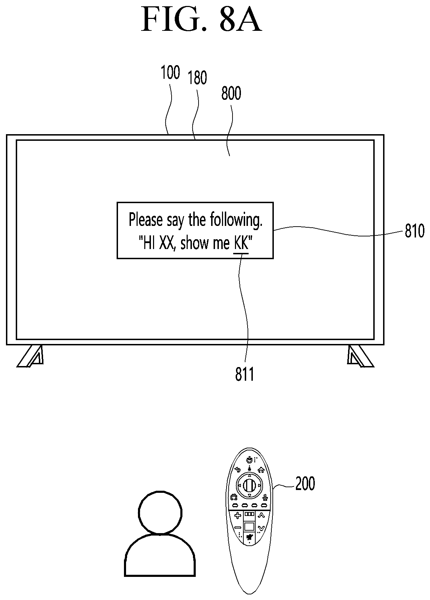

FIGS. 8a to 8c are diagrams explaining examples of displaying various forms of speaker registration sentences according to an embodiment of the present disclosure.

The display device 100 may display a speaker registration screen 800 on the display 180 in response to a speaker registration request through voice utterance.

Referring to FIG. 8a, the display device 100 may display a first speaker registration sentence 810 including a first prompt word 811 on the speaker registration screen 800.

The first prompt word 811 may be a name of latest content.

A user may utter a voice command corresponding to the first speaker registration sentence 810 including the first prompt word 811 toward the remote control device 200.

The display device 100 may receive the voice command from the remote control device 200, and transmit voice data corresponding to the received voice command to the speaker recognition server 610 and the STT server 630.

As such, according to an embodiment of the present disclosure, as voice data for names of latest content with little data is collected, it can be used to improve speaker recognition rate and conversion accuracy of the STT model.

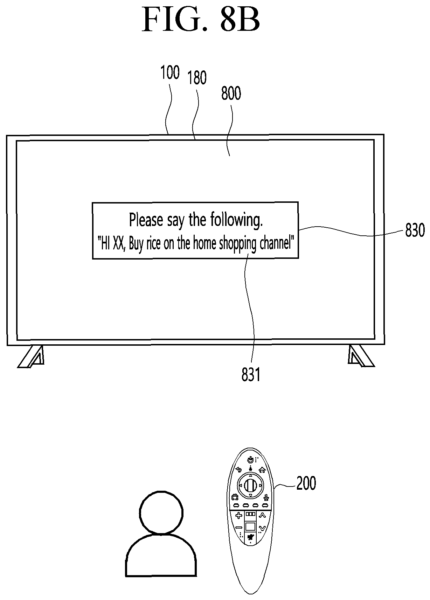

Referring to FIG. 8b, the display device 100 may display a second speaker registration sentence 830 including a second prompt word 831 on the speaker registration screen 800.

The second prompt word 831 may be a standard word that can be pronounced as a dialect. That is, the second prompt word 831 may be a word that can be pronounced differently depending on the region in one country. The second prompt word 831 may be a word that can be recognized as a dialect in the regional information of the display device 100.

A user may utter a voice command corresponding to the second speaker registration sentence 830 including the second prompt word 831 toward the remote control device 200.

The display device 100 may receive the voice command from the remote control device 200, and transmit voice data corresponding to the received voice command to the speaker recognition server 610 and the STT server 630.

As such, according to an embodiment of the present disclosure, as voice data for words corresponding to dialects is collected, it can be used to improve speaker recognition rate and conversion accuracy of the STT model.

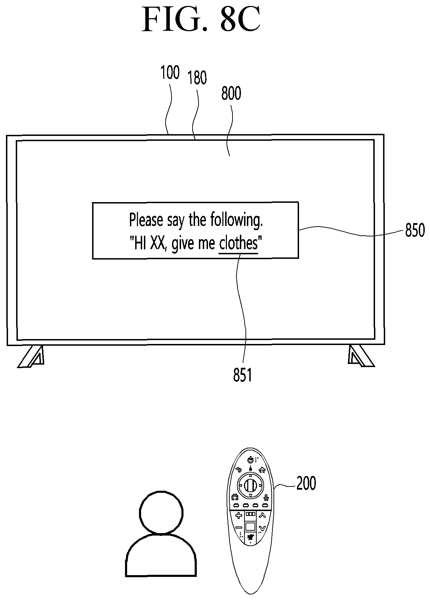

Referring to FIG. 8c, the display device 100 may display a third speaker registration sentence 850 including a third prompt word 851 on the speaker registration screen 800.

The third prompt word 851 may be a word whose word recognition rate is smaller than a preset recognition rate.

A user may utter a voice command corresponding to the third speaker registration sentence 850 including the third prompt word 851 toward the remote control device 200.

The display device 100 may receive the voice command from the remote control device 200, and transmit voice data corresponding to the received voice command to the speaker recognition server 610 and the STT server 630.

As such, according to an embodiment of the present disclosure, as voice data for words with low word recognition rate is collected, it can be used to improve speaker recognition rate and conversion accuracy of the STT model.

In another embodiment, the display device 100 may sequentially display the first speaker registration sentence 810, the second speaker registration sentence 830, and the third speaker registration sentence 850.

Accordingly, voice data for the first prompt word 811, the second prompt word 831, and the third prompt word 851 can be collected at once.

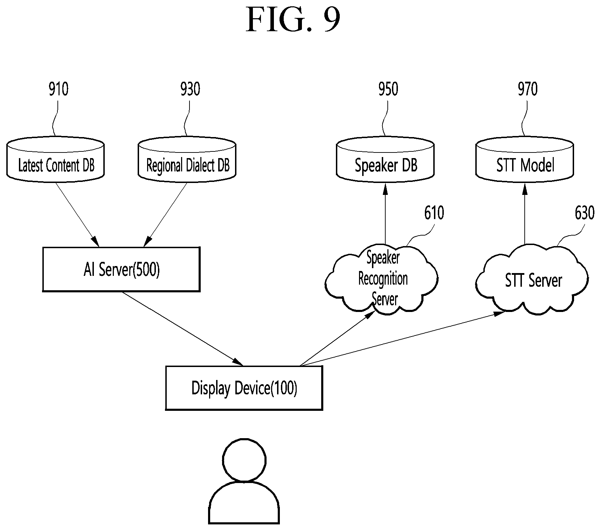

FIG. 9 is a diagram showing a collection process of voice data for prompt words according to an embodiment of the present disclosure.

The Al server 500 may receive names of latest content from the latest content DB 910.

The Al server 500 may obtain the name of latest content as a prompt word for speaker registration.

The Al server 500 may receive, from the regional dialect DB 930, words corresponding to dialects of a region corresponding to location information based on the location information of the display device 100.

The Al server 500 may obtain dialect words of a region corresponding to the location information of the display device 100 as a prompt word for speaker registration.

The Al server 500 may obtain, as a prompt word for speaker registration, a word whose word recognition rate is lower than a preset recognition rate from its own database.

The Al server 500 may transmit the generated one or more prompt words to the display device 100.

The display device 100 may generate a speaker registration sentence using the generated one or more prompt words.

As the display device 100 receives a speaker registration request through voice, as shown in FIGS. 8a to 8c, it may display the first speaker registration sentence 810, the second speaker registration sentence 830, or the third speaker registration sentence 850 on the display 180.

The display device 100 may obtain voice data uttered by the user for the speaker registration sentence, and transmit the obtained voice data and speaker identification information to the speaker recognition server 610 and the STT server 630.

The speaker recognition server 610 may extract a voice signal corresponding to the prompt word from the received voice data, and obtain characteristics of the extracted voice signal.

The speaker recognition server 610 may match the obtained characteristics of the voice signal with speaker identification information and store them in the speaker DB 950.

The speaker DB 950 may store speaker identification information of each of a plurality of speakers by matching voice characteristics of the speaker with the speaker identification information.

After speaker registration, the speaker recognition server 610 may extract characteristics of a voice command of a speaker received from the display device 100, compare the extracted characteristics with stored characteristics, and perform speaker recognition.

The speaker recognition server 610 may transmit a speaker recognition result to the display device 100, and the display device 100 may output the speaker recognition result.

The STT server 630 may convert voice data received from the display device 100 into text data. The STT server 630 may extract prompt word data corresponding to a prompt word from the converted text data.

The STT server 630 may retrain the STT model 970 using the prompt word data collected during the speaker registration process. The STT model 970 requires a vast amount of data to improve text conversion accuracy.

If the STT model 970 is retrained using prompt word data collected during the speaker registration process, the text conversion accuracy of the STT model 970 can be greatly improved.

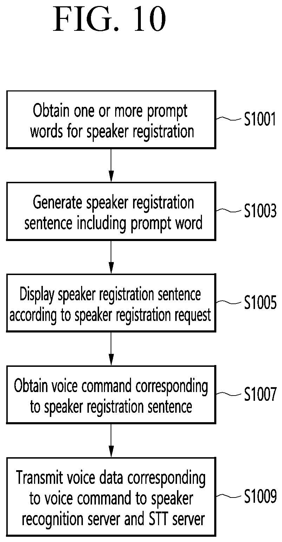

FIG. 10 is a flowchart for explaining an operating method of a display device according to an embodiment of the present disclosure.

Referring to FIG. 10, the controller 170 of the display device 100 may obtain one or more prompt words for speaker registration (S1001).

In one embodiment, the controller 170 may receive one or more prompt words from the Al server 500.

In another embodiment, the controller 170 may receive a name of latest content from a content provider server, and obtain the received name as a prompt word.

In another embodiment, the controller 170 may receive a name of latest content from the latest content DB 910.

In another embodiment, the controller 170 may receive a word representing a dialect of a region corresponding to location information of the display device 100 from the regional dialect DB 930, and obtain the received word as a prompt word.

The controller 170 of the display device 100 may generate a speaker registration sentence including the generated prompt word (S1003).

The controller 170 may generate a plurality of speaker registration sentences each including one prompt word.

As another example, the controller 170 may generate a speaker registration sentence including a plurality of prompt words.

The controller 170 of the display device 100 displays the speaker registration sentence on the display 180 in response to a speaker registration request (S1005).

The controller 170 may display the generated speaker registration sentence on the display 180 upon receiving a speaker registration request.

The controller 170 of the display device 100 may obtain a voice command uttered by a user corresponding to the speaker registration sentence (S1007).

In one embodiment, the controller 170 may receive a voice command uttered by a user corresponding to the speaker registration sentence from the remote control device 200.

In another embodiment, the controller 170 may receive a voice command uttered by a user corresponding to the speaker registration sentence through a microphone (not shown) provided in the display device 100.

The controller 170 of the display device 100 may transmit voice data corresponding to the voice command to the speaker recognition server 610 and the STT server 630 through the network interface (S1009).

The controller 170 may transmit voice data and speaker identification information to the speaker recognition server 610.

The speaker recognition server 610 may extract voice characteristics of the speaker from the received voice data, match the extracted voice characteristics with speaker identification information, and store them in the speaker DB 950.

The STT server 630 may use the received voice data for training the STT model.

As such, according to an embodiment of the present disclosure, as voice data for names of latest content with little data, words corresponding to dialects, and words with low recognition rate are collected, they can be used to improve speaker recognition rate and conversion accuracy of the STT model.

According to an embodiment of the present invention, the above-described method can be implemented as processor-readable code on a medium on which a program is recorded. Examples of processor-readable media include ROM, RAM, CD-ROM, magnetic tape, floppy disk, and optical data storage devices.

## Claims

1. A display device comprising:
a display;
a network interface configured to communicate with one or more servers; and
a controller configured to: obtain a speaker registration sentence including a prompt word for speaker registration, display the generated speaker registration sentence on the display upon receiving a request for the speaker registration, obtain a voice command corresponding to the displayed speaker registration sentence, and transmit voice data corresponding to the obtained voice command to the one or more servers through the network interface,
wherein the prompt word includes one of a name of latest content or a word representing a regional dialect.

2. The display device of claim 1,
wherein the prompt word is a word whose word recognition rate is smaller than a preset recognition rate.

3. The display device of claim 1,
wherein the controller is configured to receive the name of the latest content from a server included in the one or more servers.

4. The display device of claim 1,
wherein the controller is configured to obtain location information of the display device, and obtain the word representing the dialect of the region corresponding to the location information from a regional dialect database as the prompt word.

5. The display device of claim 1,
wherein the controller is configured to sequentially display a plurality of speaker registration sentences including different prompt words on the display.

6. The display device of claim 1,
wherein the controller is configured to transmit the voice data to a speaker recognition server and a Speech To Text (STT) server through the network interface.

7. The display device of claim 6,
wherein the controller is configured to transmit speaker identification information identifying a speaker and the voice data to the speaker recognition server.

8. A method of operating a display device, the method comprising:
obtaining a speaker registration sentence including a prompt word for speaker registration;
displaying the generated speaker registration sentence upon receiving a request for the speaker registration;
obtaining a voice command corresponding to the displayed speaker registration sentence; and
transmitting voice data corresponding to the obtained voice command to one or more servers,
wherein the prompt word includes one of a name of latest content or a word representing a regional dialect.

9. The method of claim 8,
wherein the prompt word is a word whose word recognition rate is smaller than a preset recognition rate.

10. The method of claim 8,
further comprising receiving the name of the latest content from a server included in the one or more servers.

11. The method of claim 8,
further comprising:
obtaining location information of the display device; and
obtaining the word representing the dialect of the region corresponding to the location information from a regional dialect database as the prompt word.

12. The method of claim 8,
wherein the step of displaying includes sequentially displaying a plurality of speaker registration sentences including different prompt words.

13. The method of claim 8,
wherein the step of transmitting includes transmitting the voice data to a speaker recognition server and a Speech To Text (STT) server.

14. The method of claim 13,
wherein the step of transmitting includes transmitting speaker identification information identifying a speaker and the voice data to the speaker recognition server.
